# EUROPEAN PATENT SPECIFICATION

(11) **EP 0 400 321 B1**
(45) Date of publication and mention of the grant of the patent: **29.06.1994**
(21) Application number: 90107732.1
(22) Date of filing: 24.04.1990
(51) Int. Cl.: C08L 71/12, C08L 25/08, C08L 35/06

(54) **Polyphenylene ether resin composition**
Polyphenylenether Harzmasse
Composition de résine de polyéther de phénylène

(30) Priority: 31.05.1989 JP 138571/89
(43) Date of publication of application: 05.12.1990
(73) Proprietor: JAPAN G.E. PLASTIC CO., LTD., Chuo-ku, Tokyo-to (JP)
(72) Inventor: Kazunari, Inoue (NMN), Mooka-Shi, Tochigi-ken (JP); Akihiro, Saito (NMN), Mooka-Shi, Tochigi-ken (JP)
(74) Representative: Pratt, Richard Wilson

(56) References cited:
- EP-A- 0 137 546
- EP-A- 0 244 090
- EP-A- 0 257 486
- EP-A- 0 285 969
- US-A- 4 339 376

## Description

The present invention concerns a polyphenylene ether resin composition. More specifically, the present invention concerns a polyphenylene ether resin composition characterized by an excellent blow-molding efficiency.

Since polyphenylene ether resin compositions exhibit not only an excellent heat resistance but also various other excellent properties (e.g., mechanical strength, electrical properties, water resistance, flame retardance, etc.), they can be used for various purposes as molding resin materials. Since the melt viscosity of the polyphenylene ether is high, however, the molding efficiency is inferior. Moreover, the solvent resistance and impact resistance are inferior.

In response to the aforementioned problems, a composition obtained by mixing a styrene resin with a polyphenylene ether resin has been proposed to improve the molding efficiency and impact resistance (e.g., NORYL (trademark of General Electric Co.)). Said resin composition, however, is mainly used for injection-molding, and no attempts have been made to use said resin for blow-molding. In recent years, vigorous attempts have been made to blow-mold engineering plastics based on the excellent properties of said plastics. Thus, the development of an improved blow-molding technique has become urgent.

If conventionally-known polyphenylene ether resin compositions are used, the injection-molding efficiency is sufficiently high, but it is difficult to blow-mold a fairly large hollow molded product. When a blow-molding process is implemented, a molten resin (i.e., parison) sags due to gravity. Thus, the thickness and other dimensions of the molded product become extremely nonuniform (i.e., so-called "draw-down").

When a blow-molding process is carried out using an ordinary extrusion screw-type blow-molding machine, the melt viscosity should be lowered to minimize the load applied in the extruder screw and to prevent the production of melt breaks in a process in which a molten polymer is extruded from a nozzle at high speed. To produce a molded product with uniform thickness and other dimensions by preventing the draw-down of the parison, on the other hand, a high melt viscosity is desirable.

A polymer which exhibits a low melt viscosity at a high shearing speed and a high melt viscosity at a low shearing speed is required to meet the aforementioned mutually exclusive requirements. When the conventional polyphenylene ether resin compositions are used, however, the shearing speed dependence of the melt viscosity is low. Thus, the blow-molding efficiency is questionable.

The foremost objective of the present invention, proposed to eliminate the aforementioned problems inherent in conventional methods, is to modify a polyphenylene ether resin composition which consists of polyphenylene ether and styrene resins to efficiently mold a large molded product by the blow-molding method (i.e., to increase the shearing speed dependence of the melt viscosity).

Put succinctly, the present invention concerns (1) a polyphenylene ether resin composition obtained by adding 0.01-5 parts by weight of either (a) a polyepoxy compound or (b) polyamine compound to 100 parts by weight of a composition obtained by mixing polyphenylene ether with an acid or acid anhydride group-containing styrene resin and (2) a polyphenylene ether resin composition obtained by adding 0.01-5 parts by weight of either (a) a polycarboxylic acid compound or (b) polyamine compound to 100 parts by weight of a composition obtained by mixing polyphenylene ether with an epoxy group-containing styrene resin.

As the aforementioned polyphenylene ether, polymers represented by the following general formula can be used: 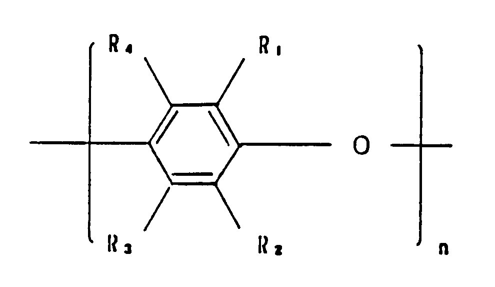
(in which R₁, R₂, R₃, and R₄ are monovalent substituents selected from among a hydrogen atom, halogen atoms, alkyl groups, alkoxy groups, and haloalkyl or haloalkoxy groups in which at least two carbon atoms are present between a halogen atom and a phenyl ring and in which no tertiary α-carbon is present; n is an integer pertaining to the degree of polymerization). Not only homopolymers made of one of the polymers represented by the aforementioned general formula but also copolymers made of two or more polymer components can be used. Especially desirable results are obtained if R₁ and R₂ are alkyl groups containing 1-4 carbon atoms. Concrete examples of such polymers include poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether. As a PPE copolymer, a copolymer in which the aforementioned polyphenylene ether repeating unit is partially substituted with an alkyl-trisubstituted phenol (e.g., 2,3,6-trimethylphenol) can be used. It is also possible to use a copolymer in which a styrene compound is grafted with said polyphenylene ether ("PPE" below). As such a styrene-grafted polyphenylene ether, a copolymer obtained by graft-polymerizing a styrene compound (e.g., styrene, α-methylstyrene, vinyltoluene, chlorostyrene) with the aforementioned PPE can be appropriately used.

The styrene resin used in the present invention must contain at least 25 wt% of constituent repeating units derived from a vinyl aromatic compound represented by the following general formula: 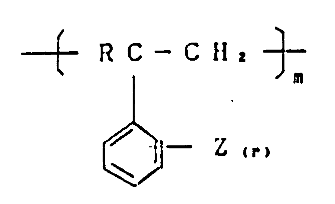
(in which A is selected from among a hydrogen atom and alkyl groups containing 1-4 carbon atoms; Z is a substituent selected from among halogen atoms and alkyl groups containing 1-4 carbon atoms; p is an integer of 1-5) with respect to the total polymer weight. Concrete examples of such styrene polymers include homopolymers derived from styrene and its derivatives as well as styrene polymers modified by elastomers (e.g., polybutadiene, polyisoprene, butyl rubber, EPDM, ethylene-propylene copolymer, natural rubber) and styrene-containing copolymers (e.g., styrene-acrylonitrile copolymer (SAN), styrene-butadiene copolymer, styrene-maleic anhydride copolymer, styrene-acrylonitrile-butadiene copolymer (ABS)). Homopolystyrene and rubber-reinforced polystyrene are especially desirable as the styrene resin of the present invention.

The aforementioned polystyrene resin of the present invention must contain a comonomer component which contains an acid or acid anhydride group or an epoxy group. concrete examples of copolymerizable acid or acid anhydride groups include unsaturated acid compounds (e.g., maleic acid, maleic anhydride, acrylic acid, butenic acid, methacrylic acid) and unsaturated epoxy compounds (e.g., glycidyl methacrylate, glycidyl acrylate, vinyl glycidyl ether, hydroxyalkyl (meth)acrylate glycidyl ethers).

The polyepoxy compound used in the present invention is a compound which contains two or more intramolecular epoxy groups. Concrete examples of such compounds include a bisphenol-type epoxy compound obtained by reacting bisphenol A with epichlorohydrin at a certain ratio, novolac epoxy resin obtained by reacting a novolac resin with epichlorohydrin, polyglycidyl ester obtained by reacting a polycarboxylic acid and epichlorohydrin, alicyclic nonionic surfactant compounds derived from alicyclic compounds (e.g., dicyclopentane), glycidyl ethers derived from alcohol-type hydroxyl group-containing aliphatic compounds (e.g., butandiol, glycerin) and epichlorohydrin, epoxylated polybutadiene, and epoxy group-containing copolymers derived from epoxy group-containing unsaturated monomers and other unsaturated monomers. The following are examples of especially desirable polyepoxy compounds. As said bisphenol A-type epoxy compounds, compounds represented by the following formula: 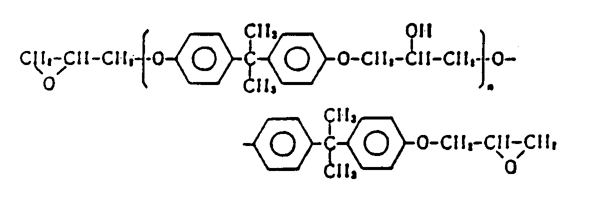
(in which n is 0-10) are ideal. As epoxy group-containing copolymers, an ethylene-glycidyl methacrylate copolymer, ethylene-vinyl acetateglycidyl methacrylate copolymer, ethylene-carbon monoxide-glycidyl methacrylate copolymer, and ethylene-acrylic acid copolymer are especially desirable. In particular, the ethylene-glycidyl methacrylate copolymer is ideal.

As polyamine compounds, compounds which contain two or more intramolecular amino groups can be used. Concrete examples of such compounds include aliphatic polyamines (e.g., polymethylenediamine, polyetherdiamine, diethylenetriamine, triethylenetetramine, N-aminoethylethanolamine), aromatic polyamines (e.g., m-phenylenediamine, xylenediamine, 4,4′-diaminodiphenyl ether, 4,4′-diaminodiphenylamine), alicyclic polyamines (e.g., 4,4′-diaminodicyclohexylmethane, 4,4′-diaminodicyclohexyl ether), heterocyclic polyamines (e.g., melamine, benzoguanamine), and organosilane compounds (e.g., α,ω-bis(aminopropyl)polydimethylsiloxane).

As polycarboxylic acid compounds, compounds which contain two or more intramolecular carboxylic acid groups can be used. Concrete examples of such compounds include aliphatic polycarboxylic acids (e.g., oxalic acid, malonic acid, succinic acid, glutaric acid, adipic acid, pimelic acid, fumaric acid, maleic acid, itaconic acid, citraconic acid, mesaconic acid, malic acid, citric acid) (or their salts or anhydrides), aromatic polycarboxylic acid compounds (e.g., phthalic acid, terephthalic acid, isophthalic acid, trimellitic acid, pyromellitic acid, naphthalenetricarboxylic acid) (or their salts or anhydrides), carboxylic acid group-containing copolymers (e.g., polystyrene, polyolefins), etc.

The quantity of the polyamine compound or polycarboxylic acid compound [sic] should be 0.01-5 parts by weight. If the quantity of addition is smaller than 0.01 part by weight, it is impossible to improve the shearing speed dependence of the melt viscosity. If the quantity of addition exceeds 5 parts by weight, on the other hand, it is undesirable since the viscosity increases, accompanied by deterioration of the physical appearance.

After the polyepoxy compound, polyamine compound, or polycarboxylic acid compound shown in Table I had been melt-mixed with a composition of 50 parts of polyphenylene ether (PPE) and 50 parts of an acid anhydride group-containing rubber-reinforced styrene resin (HIPS-1) and [sic] an epoxy group-containing rubber-reinforced styrene resin (HIP-2), a pellet was obtained.

The melt viscosity of the resulting pellet was measured according to the following procedures. The melt viscosity (MV) was measured at a shearing speed of 1 sec⁻¹ and 100 sec⁻¹ using a capillary flow tester. The ratio of the aforementioned two values was defined as the "MV ratio." If the shearing speed of a molten resin is low during a blow-molding process, the MV ratio should be higher to inhibit the draw-down of the parison. When the shearing rate is high, on the other hand, the MV value should be low to minimize the load applied on the extruder screw. As the value increases, the resin composition has a more desirable blow-molding efficiency (i.e., viscosity profile).

The measurement temperature and data are summarized in Table I.

As comparative examples, data on a composition of only polyphenylene ether (PPE) and a rubber-reinforced styrene resin are also shown in the same table.

Each of the compositions obtained in the application examples had an MV ratio higher than that in the comparative example. Thus, it is obvious that the blow-molding efficiency has been improved in the present invention.

**TABLE I**

| | | APPLICATION EXAMPLE | EXAMPLE 1 | EXAMPLE 2 | EXAMPLE 3 | COMPARATIVE EXAMPLE |
|---|---|---|---|---|---|---|
| **PPE** | | 50 | 50 | 50 | 50 | 50 |
| **HIPS-1** | | 50 | 50 | | | |
| **HIPS-2** | | | | 50 | 50 | |
| **HIPS** | | | | | | 50 |
| POLYEPOXY COMPOUND | | EPOXY GROUP CONTAINING POLYSTYRENE | | | | |
| POLYAMINE COMPOUND | | | MELAMINE 1 | XYLENAMINE 0.5 | | |
| POLYCARBOXYLIC ACID COMPOUND | | | | | PYROMELLITIC ACID 0.5 | |
| MV RATIO | 250 | 12.5 | 11.6 | 13.0 | 14.5 | 9.7 |
| | 250 | 11.0 | 10.0 | 13.0 | 13.0 | 7.1 |
| | 250 | 11.5 | 10.0 | 12.0 | 12.0 | 5.1 |

## Claims

1. A polyphenylene ether resin composition obtained by adding 0.01-5 parts by weight of either (a) a polyepoxy compound or (b) polyamine compound to 100 parts by weight of a composition obtained by mixing polyphenylene ether with an acid or acid anhydride group-containing styrene resin.

2. A polyphenylene ether resin composition obtained by adding 0.01-5 parts by weight of either (a) a polycarboxylic acid compound or (b) polyamine compound to 100 parts by weight of a composition obtained by mixing polyphenylene ether with an epoxy group-containing styrene resin.

## Patentansprüche

1. Polyphenylenätherharz-Zusammensetzung, die durch Zugabe von 0,01 - 5 Gewichtsteilen von entweder
(a) einer Polyepoxyverbindung, oder
(b) Polyaminverbindung
zu 100 Gewichtsteilen einer Zusammensetzung erhalten wird, die durch Mischen von Polyphenylenäther mit einer Säure- oder Säureanhydridgruppe-enthaltenden Styrolharz erhalten worden ist.

2. Polyphenylenätherharz-Zusammensetzung, die durch Zugabe von 0,01 - 5 Gewichtsteilen von entweder
(a) einer Polycarbonsäure-Verbindung oder
(b) Polyaminverbindung
zu 100 Gewichtsteilen einer Zusammensetzung erhalten wird, die durch Mischen von Polyphenylenäther mit einem Epoxygruppen enthaltenden Styrolharz erhalten worden ist.

## Revendications

1. Composition de résine de polyphénylène-éther obtenue en ajoutant de 0,01 à 5 parties en poids, soit (a) d'un composé polyépoxy, soit (b) d'un composé polyamine, à 100 parties en poids d'une composition obtenue en mélangeant du polyphénylène-éther avec une résine styrénique contenant un groupe acide ou un groupe anhydride d'acide.

2. Composition de résine de polyphénylène-éther obtenue en ajoutant de 0,01 à 5 parties en poids, soit (a) d'un composé acide polycarboxylique, soit (b) d'un composé polyamine, à 100 parties en poids d'une composition obtenue en mélangeant un polyphénylène-éther avec une résine styrénique contenant un groupe époxy.
